# EUROPÄISCHE PATENTSCHRIFT

(11) **EP 3 551 013 B1**
(45) Veröffentlichungstag und Bekanntmachung des Hinweises auf die Patenterteilung: **10.03.2021**
(21) Anmeldenummer: 17818486.7
(22) Anmeldetag: 08.12.2017
(51) Int. Cl.: A47D 1/10, A47D 15/00, A47C 3/04, A47C 5/12, B29C 39/10, B29C 44/12, B29C 70/68

(54) **SITZERHÖHUNG SOWIE VERFAHREN ZUM HERSTELLEN EINER SITZERHÖHUNG**
BOOSTER SEAT AND METHOD FOR PRODUCING A BOOSTER SEAT
REHAUSSEUR ET PROCÉDÉ DE FABRICATION D'UN REHAUSSEUR

(30) Priorität: 09.12.2016 DE 102016123944
(43) Veröffentlichungstag der Anmeldung: 16.10.2019
(73) Patentinhaber: BF17 GmbH, 85649 Brunnthal (DE)
(72) Erfinder: HÖHN, Wolfgang, 85649 Brunnthal (DE)
(74) Vertreter: Hofstetter, Schurack & Partner
(86) Internationale Anmeldenummer: PCT/EP2017/082032
(87) Internationale Veröffentlichungsnummer: WO 2018/104520

(56) Entgegenhaltungen:
- WO-A1-2008/117039
- WO-A1-2009/004371
- DE-A1- 19 636 814
- US-A- 3 604 749
- US-A- 4 798 412
- US-A1- 2004 084 938
- US-A1- 2012 104 816
- US-A1- 2014 368 004
- US-A1- 2015 351 558

## Beschreibung

Die vorliegende Erfindung betrifft eine Sitzerhöhung umfassend eine Sitzschale, welche eine Unterseite zur Abstützung der Sitzschale auf einer Sitzgelegenheit und eine Oberseite aufweist, an welcher eine Sitzfläche sowie diese seitlich und rückwärtig begrenzende Seitenwangen- und Rückenbereiche vorgesehen sind, sowie zumindest ein erstes Gurtsystem zum Befestigen der Sitzschale an der Sitzgelegenheit. Weiterhin betrifft die vorliegende Erfindung ein Verfahren zum Herstellen einer Sitzerhöhung.

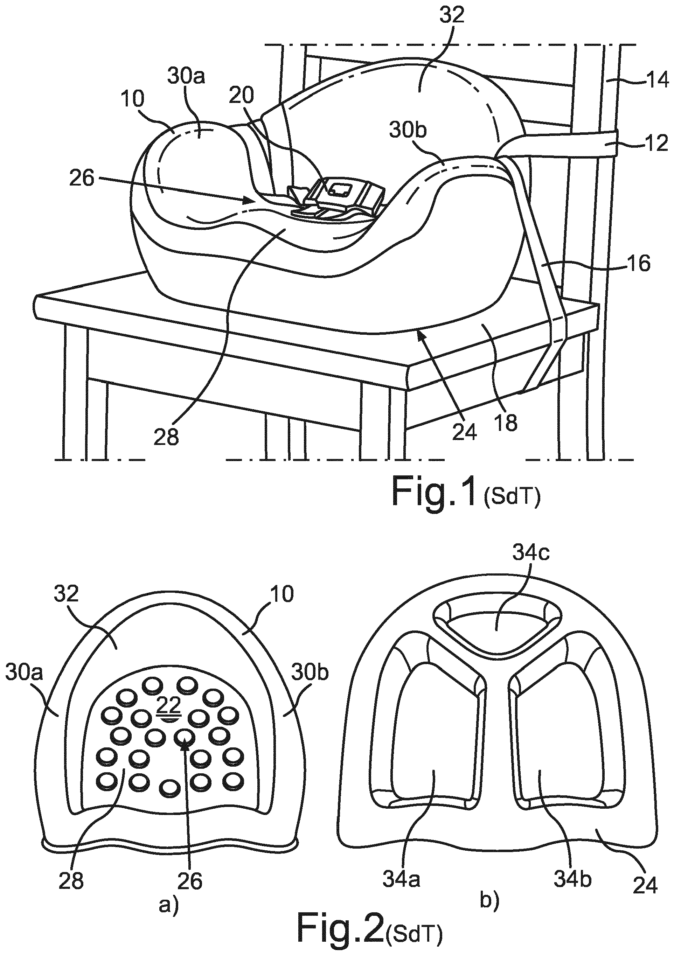

Es gibt unterschiedliche Arten, Kleinkindern das Essen am Familientisch zu ermöglichen. Anstelle eines Hochstuhls wird häufig eine Sitzerhöhung verwendet, die auf einem Stuhl für Erwachsene befestigt wird und den Abstand der Sitzfläche zur Tischplatte verringert. In diesem Zusammenhang legt die Norm E DIN EN 16120 die Sicherheitsanforderungen an und die entsprechenden Prüfverfahren für Sitzerhöhungen für Stühle fest, die für Kleinkinder, die ohne Unterstützung sitzen können, bis zu einem Alter von drei Jahren oder einem Höchstkörpergewicht von 15 kg bestimmt sind. Die letzte Fassung dieser Norm trägt die Bezeichnung EN 16120: 2012 + A1: 2014. Unter anderem ist hierbei festgelegt, dass die Sitzerhöhung an ihrer Sitzlehne und ihrer Sitzfläche auf beziehungsweise an dem Stuhl zu fixieren ist. Weiterhin ist ein Drei-Punkt-Haltegurt an der Sitzerhöhung vorzusehen. In diesem Zusammenhang zeigt Fig. 1 eine aus dem Stand der Technik unter der Bezeichnung "Keekaroo Cafe Booster" bekannte Sitzerhöhung 10, die einen ersten Haltegurt 12 zur Fixierung der Sitzerhöhung 10 an einer Stuhllehne 14 umfasst. Sie weist überdies einen zweiten Haltegurt 16 auf, um die Sitzerhöhung 10 auf der Sitzfläche eines Stuhls 18 zu fixieren. Überdies ist ein Drei-Punkt-Haltegurt 20 zum Halten des Kleinkinds in der Sitzerhöhung 10 vorgesehen. Die Haltegurte 12, 16 sind so ausgebildet, dass zum Schließen des Haltegurts unter Einstellung einer geeigneten Gurtlänge das Gurtende durch eine Gurtschnalle zu fädeln ist. Die Gurtschnalle des Haltegurts 12 befindet sich auf der Rückseite der Stuhllehne 14, während sich die Gurtschnalle des Haltegurts 16 auf der Unterseite der Sitzfläche 18 befindet. Die Sitzerhöhung 10 umfasst eine Sitzschale 22, welche eine Unterseite 24 zur Abstützung der Sitzschale 22 auf einer Sitzgelegenheit, insbesondere einem Stuhl, und eine Oberseite 26 aufweist, an welcher eine Sitzfläche 28 sowie diese seitliche begrenzende Seitenwangenbereiche 30a, 30b sowie ein rückwärtig begrenzender Rückenlehnenbereich 32 vorgesehen sind.

Fig. 2 zeigt eine aus dem Stand der Technik unter der Bezeichnung "BabySmart Cooshee Booster Hyback" bekannte Sitzerhöhung 10, die für Kinder eingesetzt werden darf, die älter als 36 Monate sind, da dann die oben erwähnte DIN Norm nicht mehr einschlägig ist. Diese Sitzerhöhung 10 weist ebenfalls Seitenwangenbereiche 30a, 30b sowie eine Sitzschale 22 mit einer Sitzfläche 26 auf. Weitere Komponenten, die denen von Fig. 1 entsprechen, sind mit denselben Bezugszeichen gekennzeichnet. Fig. 2a zeigt eine Draufsicht auf die Sitzerhöhung 10, während Fig. 2b eine Ansicht der Sitzerhöhung 10 von unten zeigt. Die Unterseite 24 der Sitzerhöhung 10 weist drei Aussparungen 34a, 34b und 34c auf. Dadurch lässt sich einerseits das Gewicht der Sitzerhöhung 10 reduzieren, andererseits lassen sich die Materialkosten senken.

Ohne die Verwendung von Kinderstühlen oder Sitzerhöhungen besteht die Gefahr, dass Kleinkinder von nicht für sie ausgelegten Sitzgelegenheiten kippen und sich dabei verletzen. Insbesondere im Hotel- und Gastronomiebereich, d.h. in öffentlichen Lokalitäten, werden Sitzerhöhungen häufig nicht in ausreichender Zahl vorgehalten.

Aus der US 7,011,368 B2 ist eine Kinderzurückhaltevorrichtung zur Verwendung mit Flugzeugsitzen bekannt. Sie umfasst einen schalenförmigen Körper, in dem ein Boden und Seitenwände integral eingeformt sind. Wie insbesondere in Fig. 3 der genannten Druckschrift gut zu erkennen ist, kann ein Kleinkind bei dessen Transport in einem Flugzeug in Gebrauchsstellung der Kinderzurückhaltevorrichtung darin eine sichere, liegende Stellung einnehmen. Die Kinderzurückhaltevorrichtung weist in ihrem Bodenabschnitt Durchgangsöffnungen für den Sitzgurt der eigentlichen Flugzeugsitze auf und kann so an einem Flugzeugsitz befestigt werden.

Aus der DE 10 2011 016 196 B4 ist ein Kindersicherheitssitz bekannt, der eine Sitzschale mit einer Oberseite und einer entgegengesetzten Unterseite sowie zwei Armlehne umfasst, die an der linken bzw. rechten Seite der Sitzschale nach oben vorstehen und jeweils schräg verlaufende Innenflächen und schräg verlaufende Außenflächen umfassen, wobei die Oberseite der Sitzschale mit mindestens einer Erhebung versehen ist und die Unterseite mindestens einen einseitig ausgesparten Bereich, d.h. eine offene - im Gegensatz zu einer umschlossenen - Aussparung, aufweist, der jeweils der Position der Erhebung entspricht, wobei der einseitig ausgesparte Bereich eine Form hat, die so angepasst ist, dass sie mit der Form der Erhebung übereinstimmt. Wenn ein erster derartiger Kindersicherheitssitz auf einen zweiten derartigen Kindersicherheitssitz gestapelt ist, bilden die schräg verlaufenden Außenflächen der Armlehnen des ersten Kindersicherheitssitzes eine Übergangspassung mit den schräg verlaufenden Innenflächen der Armlehnen des zweiten Kindersicherheitssitzes. Eine ausreichende Stabilität beim Stapeln wird damit durch Zusammenwirken zweier Maßnahmen erreicht: erstens, zwei Erhebungen eines ersten Sitzes greifen in zwei offene Aussparungen eines zweiten Kindersitzes ein, und zweitens die beiden Armlehnen eines ersten Kindersitzes stützen sich an den beiden Armlehnen eines zweiten Kindersitzes ab. Bei Sitzerhöhungen für Kleinkinder ist es jedoch nicht möglich, die Armlehnen wie in der genannten Druckschrift auszubilden, da dadurch ein Kleinkind nicht ausreichend stabil in der Sitzerhöhung sitzen würde. Überdies weist ein derartiger Kindersicherheitssitz keine Rückenlehnen- bzw. keinen Rückenbereich auf und ist daher auch aus diesem Grund bei Kleinkindern nicht einsetzbar.

Aus der US 2008/0191530 A1 ist eine Sitzerhöhung bekannt, die allerdings keinen Seitenwangenbereich und keinen Rückenlehnen- bzw. Rückenbereich aufweist.

Die WO 2008/117039 A1 beschreibt ein Zusatzkissen mit einem Basisabschnitt und einem Sitzabschnitt, der an dem Basisabschnitt anbringbar und von diesem lösbar ist. In einer entfalteten Anordnung ist der Sitzabschnitt an dem Basisabschnitt mittels eines Vorsprungs an dem Sitzabschnitt angebracht, der eng in eine Aussparung in dem Basisabschnitt passt. Der Basisabschnitt weist einen Hohlraum auf, in dem der Sitzabschnitt verstaut werden kann.

Die US 2012/0104816 A1 beschreibt eine stapelbare Kunststoffboostersitzvorrichtung mit einem Körper, der einen Satz von vier zylindrischen Eckabschnitten aufweist. Ein rechter Fuß mit zylindrischen Abschnitten greift in zweite zylindrische Eckabschnitte und ein linker Fuß greift in die anderen beiden zylindrischen Eckabschnitte ein. Der Körper umfasst eine Rückenlehne mit einer Lordosenstütze, einen Sitz mit einer Sicherheitsstütze und eine Abwärts- und Rückwärtsneigung, sodass ein Kind dazu neigt, in dem Gerät entfernt von der Sicherheitsstütze und gegen die Lordosenstütze richtig zu sitzen.

Aus der DE 196 36 814 A1 ist ein Verfahren zur Herstellung eines Schaumstoffformteils mit einer Armierung durch einen Schäumprozess in einem Schäumwerkzeug bekannt, wobei die Armierung ein Faserwerkstoff ist und der Faserwerkstoff vor oder während des Schäumprozesses mit einer Substanz beaufschlagt wird, deren Moleküle eine oder mehrere funktionelle Gruppen aufweisen, welche an der Reaktion der Monomere während des Schäumprozesses beteiligt sind, sowie ein entsprechendes Formteil. Das Formteil kann einen Fahrzeugsitz darstellen, wobei in einem Schaumstoff Profile oder Gurteinlagen eingeschäumt sind.

Die Aufgabe der vorliegenden Erfindung besteht deshalb darin, gattungsgemäße Sitzerhöhungen derart weiterzubilden, dass eine Reduktion der Anzahl von Verletzungen von Kleinkindern durch Unfälle beim Sitzen ermöglicht wird. Die Aufgabe besteht weiterhin darin, ein Verfahren zum Herstellen einer entsprechenden Sitzerhöhung bereitzustellen.

Diese Aufgaben werden gelöst durch eine Sitzerhöhung mit den Merkmalen von Patentanspruch 1 sowie ein Verfahren zum Herstellen einer Sitzerhöhung mit den Merkmalen von Patentanspruch 15.

Der vorliegenden Erfindung liegt die Erkenntnis zugrunde, dass vorhandene Sitzerhöhungen für Kleinkinder unter 36 Monaten häufig nicht ordnungsgemäß verwendet werden, da deren Bedienung aufwändig, insbesondere zeitaufwändig, und damit zu benutzerunfreundlich ist. Eine Analyse der in Fig. 1 dargestellten Sitzerhöhung liefert das Ergebnis, dass junge Mütter, die häufig noch an Verletzungen resultierend aus dem Geburtsvorgang einerseits und/oder erhöhtem Gewicht andererseits leiden, wenig Freude an dem Umstand haben, dass der Mechanismus zur Fixierung der Sitzerhöhung bzw. zur korrekten Einstellung der Gurtlänge an der schlecht zugänglichen Unterseite der Sitzfläche des Stuhls zu bedienen ist. Die Adjustierung und Fixierung der Gurte erfolgt also unter dem Stuhl. Dazu muss der Verwender auf die Knie gehen und unter die Sitzfläche schauen. Solange die Sitzerhöhung noch nicht an der Sitzfläche des Stuhls fixiert ist, kann der Stuhl auch nicht umgedreht werden, um eine bessere Zugänglichkeit zum Gurtschloss zu ermöglichen. Bei dem in Fig. 1 dargestellten Fixiermechanismus muss das Ende eines Haltegurts quasi blind unter der Sitzfläche des Stuhls in eine entsprechende Gurtschlaufe eingefädelt werden.

Die vorliegende Erfindung basiert weiterhin auf der Erkenntnis, dass die Häufigkeit der Verwendung von Sitzerhöhungen für Kleinkinder unter 36 Monaten gesteigert werden kann, wenn der Verschlussmechanismus für die Fixierung der Sitzerhöhung an der Sitzfläche eines Stuhls in einen Bereich verlegt wird, der von einer Person, die vor dem Stuhl steht, gut eingesehen werden kann. Im nicht einsehbaren Bereich findet dann lediglich ein Durchführen eines Haltegurts unter der Sitzfläche hindurch statt. Dazu wird keine durchgehende Sicht auf den Haltegurt benötigt. Das Schließen des Haltegurts, insbesondere in der zur Fixierung der Sitzerhöhung geeigneten Länge, findet dann im gut zugänglichen und problemlos einsehbaren Bereich statt.

Um dies zu ermöglichen, umfasst bei einer erfindungsgemäßen Sitzerhöhung das erste Gurtsystem eine erste, eine zweite, eine dritte und eine vierte Öse mit jeweiligem Haltesteg sowie einen ersten und einen zweiten Haltegurt, wobei die erste und die zweite Öse dem ersten Haltegurt und die dritte und die vierte Öse dem zweiten Haltegurt zugeordnet sind, wobei die erste und die zweite Öse im vorderen Außenbereich des jeweiligen Seitenwangenbereichs angeordnet sind, wobei die dritte und die vierte Öse im hinteren Außenbereich des jeweiligen Seitenwangenbereichs oder im seitlichen Außenbereich des Rückenbereichs angeordnet sind.

Bevorzugt wird der jeweilige Haltesteg weiterhin dazu genutzt, die jeweilige Öse beim Schäumen der Sitzerhöhung in der Negativform zu fixieren. Dadurch ergibt sich eine Doppelfunktion des jeweiligen Haltestegs.

Hinsichtlich der Stabilität ist es bevorzugt, wenn die erste und die zweite Öse in der vorderen Hälfte des Außenbereichs, insbesondere im vorderen Drittel des Außenbereichs, angeordnet sind. Entsprechend sind die dritte und die vierte Öse bevorzugt in der hinteren Hälfte des Außenbereichs des jeweiligen Seitenwangenbereichs, insbesondere im hinteren Drittel des Außenbereichs des jeweiligen Seitenwangenbereichs, angeordnet. Alternativ findet die Anordnung der dritten und der vierten Öse bevorzugt im jeweiligen äußeren Drittel des Außenbereichs des Rückenbereichs statt.

Es ist weiterhin bevorzugt, wenn die erste und die zweite Öse und/oder die dritte und die vierte Öse in der jeweiligen unteren Hälfte des jeweiligen Bereichs angeordnet sind. Auf diese Weise kann eine besonders gute und stabile Fixierung an der Sitzfläche beziehungsweise Sitzlehne erzielt werden.

In diesem Zusammenhang sind die erste und die zweite Öse derart angeordnet, dass der jeweilige Haltesteg in Gebrauchsstellung der Sitzerhöhung horizontal orientiert ist, und die dritte und die vierte Öse sind derart angeordnet, dass der jeweilige Haltesteg in Gebrauchsstellung der Sitzerhöhung vertikal orientiert ist. Auf diese Weise erfolgt eine Ausrichtung des jeweiligen Haltegurts senkrecht zur Orientierung des jeweiligen Haltestegs, wodurch im Hinblick auf Bewegungen des in der Sitzerhöhung positionierten Kleinkinds sehr stabile Fixierungen ermöglicht werden.

Erfindungsgemäß umfasst die jeweilige Öse eine Ösenwanne mit rund ausgebildetem Innenbereich. Dies ermöglicht ein besonders einfaches Einfädeln des entsprechenden Haltegurts, um ihn um den zugeordneten Haltesteg herumzuführen. Weiterhin bevorzugt weist die Außenumfangskontur der jeweiligen Öse keine Ecken auf. Sie ist insbesondere rund, oval oder elliptisch ausgebildet. Auf diese Weise ist ein versehentliches Hängenbleiben eines Passanten, das zu einem Lösen oder Lockern der Öse führen könnte, zuverlässig verhindert.

Weiterhin ist die Sitzschale als geschäumtes Formteil ausgebildet, in dem die jeweiligen Ösen aufgenommen sind, wobei jede Öse einen Steg aufweist, der einerseits mit der Ösenwanne, andererseits mit einem Halteanker zum Halten der Öse in dem geschäumten Formteil gekoppelt ist.

Bevorzugt wird eine erfindungsgemäße Sitzerhöhung aus Polyurethan hergestellt. Polyurethan zeichnet sich durch eine sehr gute Haptik, niedrige Anforderungen an die Pflege sowie eine hervorragende Nachgiebigkeit aus, so dass eine Verletzungsgefahr minimiert ist. In diesem Zusammenhang hat es sich als besonders vorteilhaft herausgestellt, wenn die Polyurethan-Oberfläche mit einem gegen UV-Strahlung resistenten Lack lackiert ist. Da erfindungsgemäße Sitzerhöhungen für Kleinkinder ausgelegt sind, kann deren Attraktivität durch farbenfrohe Ausbildung gefördert werden. Eine Lackierung mit einem gegen UV-Strahlung resistenten Lack verhindert zuverlässig ein Verblassen der leuchtenden Farben und hält damit die Attraktivität derartiger Sitzerhöhungen über einen langen Zeitraum aufrecht.

Durch die Verwendung eines Halteankers kann eine Fixierung der Öse im geschäumten Formteil erreicht werden. Durch das Vorsehen eines Stegs, der zwischen Öse und Halteanker angeordnet ist, wird die Fixierung der Öse in den "Tiefen" der Sitzerhöhung, d.h. möglichst weit weg von der äußeren Begrenzung, und damit eine besonders zuverlässige Fixierung erzielt. Auf diese Weise lässt sich beinahe die gesamte Materialstärke im entsprechenden Seitenwangen- oder Rückenbereich beziehungsweise Rückenlehnenbereich zur Fixierung verwenden.

Bevorzugt weist der Steg eine Mehrzahl an Einzelstegen auf, die an der Öse abgestützt sind. Bevorzugt sind zumindest zwei der Einzelstege räumlich unterschiedlich orientiert, um die Öse besonders zuverlässig gegen Relativbewegungen zum geschäumten Formteil zu schützen.

Um ein Ausreißen der Ösen beziehungsweise Beschädigungen an den Ösen durch unachtsamen Umgang mit einer erfindungsgemäßen Sitzerhöhung zu verhindern, kann vorgesehen sein, dass die jeweilige Öse samt Steg und Halteanker formschlüssig in dem geschäumten Formteil aufgenommen ist. Damit tritt die Öse nicht oder im Wesentlichen kaum über die Kontur der Sitzerhöhung hinaus und bietet demnach wenig, insbesondere keine Angriffsfläche.

In einer bevorzugten Ausführungsform ist der jeweilige Halteanker im Querschnitt wellenförmig ausgebildet. Dadurch wird erreicht, dass der Halteanker bei Zugbelastung die Zugkraft gleichmäßig auf das umgebende Material des geschäumten Formteils verteilen kann, insbesondere in den Übergangsbereichen vom Halteanker zum geschäumten Formteil, möglichst wenig beansprucht wird. Damit kann ein vorzeitiger Verschleiß der Fixierung des Halteankers in dem geschäumten Formteil und damit ein Herausreißen der Öse selbst bei hoher Beanspruchung im Dauergebrauch zuverlässig verhindert werden.

Der jeweilige Halteanker kann überdies mindestens einen Schlitz aufweisen, der parallel zum jeweiligen Haltesteg verläuft, und/oder mindestens eine Durchgangsöffnung. Da beim Schäumen des geschäumten Formteils dieser mindestens eine Schlitz und/oder diese mindestens eine Durchgangsöffnung mit Material des geschäumten Formteils gefüllt wird, lässt sich hierdurch die Fixierung des Halteankers im geschäumten Formteil weiter verbessern.

Bevorzugt weist der erste und der zweite Haltegurt einen Klettverschluss auf. Dadurch kann das Gurtende besonders einfach um den Haltesteg der jeweiligen Öse geführt und anschließend fixiert werden. Im Gegensatz zu einer Fixierung eines Haltegurts in einem Gurtschloss, bei der das Gurtschloss zur Fixierung auf die Abmessungen des Haltegurts abgestimmt sein muss, kann bei der vorliegenden Erfindung die Öse samt Ösenwanne und Haltesteg sehr viel größere Abmessungen aufweisen als die Breite des Haltegurts. Auf diese Weise ist die Fixierung einer erfindungsgemäßen Sitzerhöhung besonders benutzerfreundlich möglich.

Gemäß einer bevorzugten Ausführungsform weist die Unterseite des Sitzes zumindest eine erste Aussparung zur Aufnahme des ersten Haltegurts und eine zweite Aussparung zur Aufnahme des zweiten Haltegurts auf. Auf diese Weise sind die einer jeweiligen Sitzerhöhung zugeordneten Haltegurte bei Nichtverwendung zuverlässig an die jeweilige Sitzerhöhung gekoppelt - was besonders bei einem Transport der Sitzerhöhung von Bedeutung ist - ohne die gegebenenfalls zusätzlich vorgesehene Stapelbarkeit zu beeinträchtigen und ohne die Gefahr, dass eine passierende Person sich zufällig in einem Haltegurt verfängt. Sie sind demnach nicht störend aufgeräumt und stehen für den nächsten Einsatz schnell zur Verfügung.

Gemäß einer bevorzugten Weiterbildung weist die erste Aussparung eine erste Klemmvorrichtung zum Festklemmen des ersten Haltegurts und die zweite Aussparung eine zweite Klemmvorrichtung zum Festklemmen des zweiten Haltegurts auf. Damit wird ein Fixieren der Haltegurte ohne ein mechanisch bewegliches Teil ermöglicht. Da jedes mechanische Teil gewartet werden muss, ist dadurch eine hohe Zuverlässigkeit bei geringstem Wartungsaufwand ermöglicht.

Besonders vorteilhaft ist es in diesem Zusammenhang, wenn die Sitzerhöhung als geschäumtes Formteil ausgebildet ist, wobei die erste und die zweite Klemmvorrichtung in das geschäumte Formteil, d.h. in die Negativform, eingeformt sind. Auf diese Weise lassen sich die Klemmvorrichtungen besonders kostengünstig herstellen, da diese ohne weiteren Aufwand beim Schäumen des Formteils in einem Arbeitsgang erzeugt werden. Durch die Ausbildung der Klemmvorrichtungen aus dem Material des geschäumten Formteils wird überdies eine Elastizität der Klemmvorrichtung bereitgestellt, die für eine besonders zuverlässige Fixierung der Haltegurte sorgt.

Besonders bevorzugt ist es in diesem Zusammenhang, wenn die erste und die zweite Klemmvorrichtung jeweils zumindest einen ersten Bereich mit einer ersten Weite und zumindest einen zweiten Bereich mit einer zweiten Weite umfassen, wobei die erste Weite größer ist als die zweite Weite. Damit kann der Bereich mit der zweiten Weite zur zuverlässigen Fixierung eines insbesondere zusammengefalteten Haltegurts dienen, während der Bereich erster Weite den Haltegurt lediglich aufnimmt, ohne diesen rutschfest zu fixieren. Auf diese Weise kann der jeweilige Haltegurt besonders einfach in die Klemmvorrichtung eingeführt und aus dieser wieder entnommen werden.

Noch vorteilhafter ist es in diesem Zusammenhang, wenn der Übergangsbereich von einem ersten Bereich zu einem zweiten Bereich abgerundet ist. Hierdurch wird das Einführen des Haltegurts in die Klemmvorrichtung nochmals erleichtert.

Bevorzugt sind die erste Aussparung, die für die Aufnahme des ersten Haltegurts vorgesehen ist, und die zweite Aussparung, die für die Aufnahme des zweiten Haltegurts vorgesehen ist, als gemeinsame Aussparung ausgebildet. Dadurch lässt sich eine Materialersparnis erzielen, die in einem besonders niedrigen Gewicht einer derartigen Sitzerhöhung resultiert. Weiterhin verringert sich dadurch der Aufwand bei der Herstellung der Negativform.

Um den Einsatz einer derartigen Sitzerhöhung für Kinder unter 36 Monaten zu ermöglichen, kann weiterhin ein zweites Gurtsystem zum Halten eines Insassen in der Sitzschale vorgesehen sein. Dieses ist bevorzugt als Drei-Punkt-Haltegurt ausgeführt.

In Lokalen werden häufig deshalb nicht genügend Sitzerhöhungen für Kleinkinder vorgehalten, weil diese zu viel Stauraum beanspruchen. Werden bekannte Sitzerhöhungen für Kleinkinder aufeinander gestapelt, ist der Stapel instabil und kippt um. Die für eine Zahl n an Sitzerhöhungen benötigte Aufbewahrungsfläche beträgt demnach im Wesentlichen n mal die Grundfläche, d.h. die Fläche der Unterseite, einer Sitzerhöhung.

Um die benötigte Stellfläche für die Aufbewahrung einer Vielzahl von Sitzerhöhungen für Kleinkinder zu reduzieren, kann vorgesehen sein, dass die Unterseite der Sitzschale eine Stapelkontur aufweist, welche zur Schaffung einer Stapelmöglichkeit auf die Oberseite der Sitzschale abgestimmt ist. Auf diese Weise lassen sich eine Vielzahl Sitzerhöhungen teilweise ineinander und übereinander zu einem stabilen Stapel stapeln, wobei die dafür benötigte Stellfläche lediglich die Grundfläche der Unterseite einer einzigen Sitzerhöhung beträgt. Dadurch dass jeweils zwei Sitzerhöhungen teilweise ineinander gestapelt werden, ist auch die gesamte Stellhöhe für eine vorgebbare Anzahl derartiger Sitzerhöhungen minimal. Auf diese Weise kann der Raum zwischen Boden und Decke eines Aufbewahrungsraums für die Aufbewahrung erfindungsgemäßer Sitzerhöhungen optimal genutzt werden. Auf einer Stellfläche von 80cm * 80cm lassen sich ca. 20 Sitzerhöhungen stapeln. Auf diese Weise lässt sich selbst in Lokalen mit begrenztem Raum bei geringstmöglicher Stellfläche eine große Anzahl von Sitzerhöhungen für Kleinkinder vorhalten, sodass quasi jedem Kleinkind, das eine derartige Sitzerhöhung benötigt, diese zur Verfügung gestellt werden kann.

Dadurch lässt sich die Anzahl von Sitzunfällen und damit die Anzahl von Verletzungen von Kleinkindern signifikant reduzieren. Bedenkt man, dass ein Kleinkind ohne Sitzerhöhung von der Sitzfläche eines normalen, für einen Erwachsenen vorgesehen Stuhls oder für ein größeres Kind vorgesehenen Sitzerhöhung eine Fallhöhe von circa 90 cm (Kopfhöhe) zurücklegt und der Boden in öffentlichen Lokalen häufig als Fliesenboden ausgeführt ist, wird das Potential deutlich.

Mit dem Begriff "Rückenlehnenbereich" ist im Rahmen der vorliegenden Erfindung ein Bereich gemeint, der den Rücken eines Insassen der Sitzschale stützt, insbesondere sich in Gebrauchsstellung der Sitzerhöhung in vertikaler Richtung höher erstreckt als die entsprechenden Seitenwangen. Hingegen bezeichnet der Begriff "Rückenbereich", dass der Bereich nicht unbedingt so ausgebildet sein muss, dass er den Rücken eines Insassen stützt. Vielmehr kann er auch lediglich dazu dienen, den Po des Insassen nach hinten abzustützen. Insofern kann ein Rückenbereich lediglich so hoch ausgebildet sein wie die Seitenwangen oder sogar etwas niedriger.

Bei den nachfolgend vorgestellten Sitzerhöhungen können die Seitenwangen und Rückenlehnenbereiche beziehungsweise Rückenbereiche getrennt voneinander ausgeführt sein, sie können jedoch auch, was bevorzugt ist, ineinander übergehen. Die Seitenwangenbereiche dienen der Armauflage des Kleinkinds, während der Rückenlehnenbereich beziehungsweise der Rückenbereich der Abstützung des Rückens beziehungsweise des Pos des Kleinkinds dient.
Bevorzugt ist die Sitzfläche in Gebrauchsstellung der Sitzerhöhung horizontal ausgerichtet, wobei der Begriff "horizontal" im Sinne der vorliegenden Erfindung durch Fertigungstoleranzen bedingte Abweichungen von einem Zustand "exakt horizontal" von bis zu ±4 Grad, insbesondere bis zu ±2 Grad einschließt. Der Begriff "horizontal" ist eindeutig, wenn die Sitzfläche eben ausgebildet ist. Mitumfasst sind jedoch erfindungsgemäß auch Sitzflächen, die beispielsweise strukturiert ausgebildet sind, insbesondere zum Beispiel Ausformungen für Oberschenkel und/oder Po aufweisen. Im Sinne der vorliegenden Erfindung bezieht sich dann der Begriff "horizontal" auf die Erstreckung der Po- und/oder Oberschenkelauflage vom Rückenlehnenbereich bzw. Rückenbereich zur Vorderkante der Sitzerhöhung.

Bevorzugt schließt die Sitzfläche mit dem Seitenwangenbereich und/oder dem Rückenlehnen- bzw. Rückenbereich - abgesehen von gerundeten Übergangsbereichen - einen rechten Winkel ein. Die Bezeichnung "rechter Winkel" umfasst Abweichungen aufgrund von Fertigungstoleranzen von bis zu ± 5°, insbesondere von bis zu ± 2°.

Im Rückenlehnenbereich der Oberseite ist also entsprechend eine Rückenlehne angeordnet und in den jeweiligen Seitenwangenbereichen der Oberseite ist jeweils eine Seitenwange angeordnet. Die Rückenlehne sowie die jeweiligen Seitenwangen können dabei als entsprechende Erhöhungen gegenüber der Sitzfläche ausgebildet sein. Weiterhin können dabei die Rückenlehne und die jeweiligen Seitenwangen, wie bereits beschrieben, als eine einzelne gemeinsame Erhöhung, insbesondere als U-förmige Erhöhung gegenüber der Sitzfläche ausgebildet sein. Die Rückenlehne und die jeweiligen Seitenwangen können aber auch voneinander separiert ausgebildet sein, sodass die Rückenlehne und eine jeweilige Seitenwange als jeweils einzelne Erhöhung gegenüber der Sitzfläche ausgebildet sind. Entsprechend kann dann zwischen einer jeweiligen Seitenwange und der Rückenlehne, das heißt in einem zwischen den jeweiligen Seitenwangen und der Rückenlehne befindlichen Zwischenbereich, eine jeweilige Vertiefung angeordnet sein. Diese Vertiefung zwischen einer jeweiligen Seitenwange und der Rückenlehne kann sich bis auf die Höhe der Sitzfläche erstrecken oder auch erhöht gegenüber der Sitzfläche, aber vertieft gegenüber den jeweiligen höchsten Punkten der Seitenwangen und der Rückenlehne ausgebildet sein. Korrespondierend zu diesen einzelnen Bereichen der Oberseite, nämlich dem Bereich der Sitzfläche, dem Rückenlehnenbereich, den jeweiligen Seitenwangenbereichen, und den optional zusätzlichen Zwischenbereichen, die sich zwischen dem jeweiligen Seitenwangenbereich und dem Rückenlehnenbereich befinden können, kann auch die Unterseite der Sitzschale in entsprechende Bereiche eingeteilt sein. Beispielsweise bezieht sich also der Sitzflächenbereich der Unterseite auf denjenigen Bereich der Unterseite, der der Sitzfläche der Oberseite gegenüberliegend angeordnet ist. Entsprechend bezeichnet der Rückenlehnenbereich der Unterseite denjenigen Bereich der Unterseite, der dem Rückenlehnenbereich der Oberseite gegenüberliegend angeordnet ist. Ein jeweiliger Seitenwangenbereich der Unterseite bezeichnet die jeweiligen beiden Bereiche der Unterseite, die dem jeweiligen Seitenwangenbereich der Oberseite gegenüberliegend angeordnet sind. Sind beispielsweise die Seitenwangen und die Rückenlehne als eine durchgehende Erhebung der Oberseite der Sitzschale, insbesondere U-förmig, ausgebildet, so bilden auch der Rückenlehnenbereich und die Seitenwangenbereiche der Unterseite zusammengenommen einen U-förmigen Bereich der Unterseite der Sitzschale. Die Rückenlehne und die jeweiligen Seitenwangen können aber auch voneinander separiert ausgebildet sein. Entsprechend befindet sich zwischen einer ersten Seitenwange und der Rückenlehne ein erster Zwischenbereich und zwischen einer zweiten Seitenwange und der Rückenlehne ein zweiter Zwischenbereich. Ein erster bzw. zweiter Zwischenbereich der Unterseite bezeichnet dann diejenigen Bereiche der Unterseite, welche dem ersten und zweiten Zwischenbereich der Oberseite gegenüberliegend angeordnet sind. Die Seitenwangenbereiche, der Rückenlehnenbereich und die dazwischen befindlichen Zwischenbereiche der Unterseite können dann ebenfalls einen U-förmigen Bereich der Unterseite definieren. Die Unterseite der Sitzschale kann beispielsweise aus dem Sitzflächenbereich und einem U-förmigen Bereich gebildet sein, der sich wiederum aus dem Rückenlehnenbereich, den jeweiligen Seitenwangenbereichen, und optional den jeweiligen Zwischenbereichen, zusammensetzt.

Die Unterseite kann mindestens eine umschlossene Aussparung aufweisen, die nur im Rückenlehnenbereich und/oder in dem jeweiligen Seitenwangenbereich angeordnet ist, und die ausgebildet ist, beim Stapeln einen Rückenlehnenbereich und/oder einen jeweiligen Seitenwangenbereich einer weiteren Sitzerhöhung des gleichen Typs zumindest teilweise aufzunehmen. Für den Fall, dass die Rückenlehne von den jeweiligen Seitenwangen separiert ausgebildet ist, kann die Unterseite drei solcher umschlossenen Aussparungen aufweisen, wobei eine jeweilige dieser Aussparungen im Rückenlehnenbereich und im jeweiligen Seitenwangenbereich der Unterseite angeordnet ist. Denkbar wäre aber auch nur eine umschlossene Aussparung in diesem Beispiel an der Unterseite, die zum Beispiel nur im Rückenlehnenbereich angeordnet ist. Auch dies ermöglicht bereits das Stapeln, da die Rückenlehne bezogen auf die Sitzfläche vorzugsweise höher ausgebildet ist als die jeweiligen Seitenwangen. Diese mindestens eine umschlossene Aussparung kann aber auch als einzelne U-förmige Aussparung an der Unterseite ausgebildet sein, die den Rückenlehnenbereich sowie die jeweiligen Seitenwangenbereiche der Unterseite umfasst. Ist die Rückenlehne wiederum separiert von den Seitenwangen ausgebildet, so umfasst die U-förmige Aussparung an der Unterseite zudem auch die Zwischenbereiche zwischen den jeweiligen Seitenwangenbereichen und dem Rückenlehnenbereich. Sind die Rückenlehne und die jeweiligen Seitenwangen als eine gemeinsame Erhebung ohne Zwischenbereiche ausgebildet, so umfasst entsprechend diese U-förmige umschlossene Aussparung auf der Unterseite nur den Rückenlehnenbereich und die jeweiligen Seitenwangenbereiche.

Diese Ausbildungen haben den großen Vorteil, dass sich durch eine derartige Ausgestaltung der mindestens einen umschlossenen Aussparung auf der Unterseite, die sich nicht über die gesamte Unterseite der Sitzschale erstreckt, sondern die auf einen Teilbereich der Unterseite begrenzt ist, eine erhöhte Stabilität der Sitzerhöhung beim Positionieren der Sitzerhöhung auf einer Sitzgelegenheit, wie zum Beispiel einem Stuhl, ergibt und dabei gleichzeitig die Stapelmöglichkeit durch die mindestens eine Aussparung an der Unterseite erhalten bleibt. Vorzugsweise erstreckt sich dabei die umschlossene Aussparung über weniger als die Hälfte der Fläche der Unterseite. Die Unterseite kann darüber hinaus auch mehrere voneinander separierte Aussparungen aufweisen, die dann entsprechend durch Materialstege voneinander getrennt sind. Auch in diesem Fall erstreckt sich dabei eine jeweilige umschlossene Aussparung über weniger als die Hälfte der Fläche der Unterseite. Auch hierdurch lässt sich eine erhöhte Stabilität bei der Positionierung der Sitzerhöhung auf einer Sitzgelegenheit bereitstellen. Rutscht beispielsweise der Rand der Unterseite der Sitzschale über einen an der Sitzgelegenheit hinaus, so kann dennoch die Gefahr eines Kippens der Sitzerhöhung auf ein Minimum reduziert werden, da sich die mindestens eine Aussparung nicht über die gesamte Unterseite sondern nur einen Teilbereich dieser erstreckt, der weniger als die Hälfte der Unterseite ausmacht. Weiterhin ist es bevorzugt, dass der die mindestens eine Aussparung umschließende Rand als Teil der Unterseite eine Breite von mindestens 3 cm aufweist, vorzugsweise mindestens 5 cm. Entsprechend weist auch der an die Kontur, welche die Unterseite begrenzt und insbesondere die Grenze zwischen Unterseite und Oberseite bildet, anschließende Randbereich der Unterseite eine Breite von mindestens 3 cm, vorzugsweise mindestens 5 cm auf.

Weiterhin ist es bevorzugt, dass der Rand der mindestens einen umschlossenen Aussparung, insbesondere auch die jeweiligen Ränder im Falle von mehreren Aussparungen in der Unterseite, insbesondere die Ränder aller in der Unterseite vorgesehenen Aussparungen, in einer Ebene liegen. Auch hierdurch lässt sich mehr Stabilität bereitstellen.

Darüber hinaus ist die Sitzschale vorzugsweise derart ausgebildet, dass ein Schwerpunkt der Sitzschale derart angeordnet ist, dass ein Gesamtschwerpunkt aus Sitzschale und einem auf der Sitzfläche sitzenden Kind in einem zentralen Bereich der Sitzschale angeordnet ist. Vorzugsweise liegt der Schwerpunkt der Sitzschale bei Draufsicht auf die Oberseite der Sitzschale in einer den Rückenlehnenbereich umfassenden Hälfte, aber in einem vom Rückenlehnenbereich selbst verschiedenen Bereich dieser Hälfte der Sitzschale, und zwischen der Unterseite und der Oberseite der Sitzschale. Weiterhin ist der Schwerpunkt der Sitzschale von den jeweiligen Seitenwangen gleich weit entfernt. Zudem liegt der Schwerpunkt vorzugsweise in einem vom Rückenlehnenbereich und den Seitenwangenbereichen sowie den optionalen Zwischenbereichen verschiedenen Bereich bezogen auf eine Ebene, die gegenüber der Unterseite erhöht ist. Mit anderen Worten liegt also der Schwerpunkt im Sitzflächenbereich zwischen Ober- und Unterseite der Sitzschale, insbesondere zentral in Bezug auf den Sitzflächenbereich oder zwischen der Mitte des Sitzflächenbereiches und dem Rückenlehnenbereich. Hierdurch kann eine besonders hohe Stabilität beim Sitzen erreicht werden. Zudem kann durch die Anordnung eines Materialschwerpunkts in diesem Bereich ein Durchbiegen der Sitzfläche in Richtung der Unterseite verhindert oder zumindest reduziert werden. Insbesondere befindet sich in einem den Schwerpunkt umfassenden Bereich der Sitzschale Material und keine Aussparung, d.h. also nicht die mindestens eine Aussparung. Mit anderen Worten ist die mindestens eine Aussparung, insbesondere jede Aussparung, die die Sitzschale aufweist, in einem Bereich der Sitzschale angeordnet, der von dem den Schwerpunkt umfassenden Bereich der Sitzschale verschieden ist.

Die Unterseite kann im Rückenlehnenbereich eine erste umschlossene Aussparung aufweisen, die ausgebildet ist, beim Stapeln einen Rückenlehnenbereich einer weiteren Sitzerhöhung des gleichen Typs zumindest teilweise aufzunehmen. Überdies kann die Unterseite im jeweiligen Seitenwangenbereich eine zweite umschlossene Aussparung aufweisen, die ausgebildet ist, beim Stapeln den jeweiligen Seitenwangenbereich einer weiteren Sitzerhöhung des gleichen Typs zumindest teilweise aufzunehmen. Auf diese Weise ist eine zweite, über einer ersten Sitzerhöhung angeordnete Sitzerhöhung über zumindest drei Bereiche und somit stabil und ohne die Gefahr eines Kippens gelagert. Bevorzugt sind die Aussparungen derart auf den Rücken- bzw. Rückenlehnenbereich und die Seitenwangenbereiche abgestimmt, dass die Orientierung im Raum der zweiten, über einer ersten Sitzerhöhung gestapelten Sitzerhöhung der Orientierung der ersten Sitzerhöhung im Raum entspricht. Nach diesem Prinzip können demnach eine Vielzahl derartiger Sitzerhöhungen übereinander gestapelt werden, wodurch sich ein im Wesentlichen senkrechter Stapel ergibt. Im Gegensatz zu einer einseitigen, offenen Aussparung ermöglicht eine umschlossene, nur in eine Raumrichtung geöffnete Aussparung ein Einrasten einer zweiten, über einer ersten angeordneten Sitzerhöhung und führt daher zu einem besonders stabilen Stapel.

Bevorzugt sind die erste umschlossene Aussparung und die zweiten umschlossene Aussparungen als gemeinsame umschlossene Aussparung ausgebildet. Auf diese Weise kann die Stapelbarkeit mit hoher Sicherheit bei reduziertem Materialbedarf für die Sitzerhöhung bereitgestellt werden. Überdies lässt sich hierdurch das Gewicht einer erfindungsgemäßen Sitzerhöhung reduzieren.

Eine derartige Sitzerhöhung kann durch Vorsehen entsprechender Haltegurte ausgebildet sein für den Einsatz für Kleinkinder unter 36 Monaten, sowie auch für Kleinkinder über 36 Monaten, bei denen auf Haltegurte verzichtet werden kann.

Die mit Bezug auf die erfindungsgemäße Sitzerhöhung vorgestellten Ausführungsformen und deren Vorteile gelten für das erfindungsgemäße Verfahren zum Herstellen einer Sitzerhöhung. Bei diesem wird zunächst eine Negativform einer Sitzschale bereitgestellt, welche eine Unterseite zur Abstützung der Sitzschale und eine Oberseite aufweist, an welcher eine Sitzfläche sowie diese seitlich und rückwärtig begrenzende Seitenwangen- und Rückenbereiche vorgesehen sind. Anschließend wird eine erste und eine zweite Öse mit jeweils einem Haltesteg relativ zur Negativform, insbesondere in der Negativform, im vorderen Außenbereich des jeweiligen Seitenwangenbereichs positioniert sowie eine dritte und vierte Öse mit jeweils einem Haltesteg relativ zur Negativform, insbesondere in der Negativform, im hinteren Außenbereich des jeweiligen Seitenwangenbereichs oder im seitlichen Außenbereich des Rückenbereichs. Anschließend wird ein Kunststoffschaum, bevorzugt Polyurethan, in die Negativform zur Ausbildung der Sitzschale unter Fixierung der ersten, zweiten, dritten und vierten Öse eingefüllt.

Darüber hinaus ist die Negativform vorzugsweise zweiteilig ausgeführt. Die Negativform kann also beispielsweise einen ersten Formteil und einen zweiten Formteil aufweisen, wobei der erste Formteil zu einer Oberseite der Sitzerhöhung, insbesondere der Sitzschale, korrespondiert, und wobei der zweite Formteil zur Unterseite der Sitzerhöhung bzw. der Sitzschale korrespondiert. Beim Einfüllen des Kunststoffs, insbesondere des Polyurethans, ist die Negativform derart angeordnet, dass sich der erste Formteil mit Bezug auf eine Richtung der Schwerkraft unter dem zweiten Formteil befindet. Wie zum Beispiel mit Bezug auf die erfindungsgemäße Sitzerhöhungen und ihre Ausgestaltungen beschriebenen, ist es vorteilhaft, mindestens eine Aussparung in der Unterseite der Sitzschale vorzusehen. Zu diesem Zweck kann das zweite Formteil mit mindestens einer entsprechenden Vertiefung ausgebildet sein, um die mindestens eine Aussparung in der Unterseite der Sitzschale bereitzustellen. Entsprechend kann das zweite Formteil im Bereich dieser mindestens einen Vertiefung dicker ausgebildet sein als an anderer Stelle. Weiterhin ist es besonders vorteilhaft, wenn das zweite Formteil mehrere Entlüftungsöffnungen, insbesondere in Form von Löchern oder Kanälen, aufweist. Diese Entlüftungsöffnungen sind dabei weiterhin vorzugsweise in einem Bereich des zweiten Formteils angeordnet, der von den die mindestens eine Aussparung in der Unterseite der Sitzschale bildenden Bereichen des zweiten Formteils verschieden ist. Vorzugsweise werden bzw. sind vielzählige solcher Entlüftungsöffnungen in das zweite Formteil eingebracht, wie beispielsweise mehr als 10, vorzugsweise auch mehr als 20, zum Beispiel 23 oder 24. Die Anordnung dieser Entlüftungsöffnungen hat dabei den großen Vorteil, dass diese während des Verfahrens somit in einem in Bezug auf die Richtung der Gravitationskraft höchsten Bereich der Negativform im zusammengesetzten Zustand von erstem und zweitem Formteil angeordnet sind, wodurch die Luft oder das Gas, welches beim Aufschäumen des Kunststoffs aus der Negativform entweichen muss, auch möglichst vollständig entweichen kann ohne dabei Gasblasen in Kunststoff zu bilden. Durch solche Luftrückstände oder Gasblasen können unschöne Ausbildungen und Löcher im Sitz entstehen, was somit vorteilhafterweise vermieden werden kann. Zudem kann durch diese Anordnung der Entlüftungsöffnungen weiterhin gewährleistet werden, dass die Kanäle vom Innenbereich der Negativform, d.h. im geschlossenen Zustand der Negativform, bis zur auf der Seite des zweiten Formteils liegenden Außenseite äußerst kurz ausgestaltet werden können, da sie sich im dünnen und nicht im dicken Bereich des zweiten Formteils befinden, welcher die mindestens eine Vertiefung für die mindestens eine Aussparung in der Unterseite der Sitzschale bereitstellt. Das Risiko eines Verstopfens der Kanäle kann dadurch vorteilhafterweise reduziert werden und wiederum die Bildung unschöner Gasblasen vermieden werden.

Weitere bevorzugte Ausführungsformen ergeben sich aus den Unteransprüchen.

Im Nachfolgenden werden nunmehr Ausführungsbeispiele der vorliegenden Erfindung unter Bezugnahme auf die beigefügten Zeichnungen näher beschrieben. Diese zeigen:
- Fig. 1: eine Ansicht eines ersten Beispiels einer aus dem Stand der Technik bekannten Sitzerhöhung;
- Fig. 2: ein zweites Beispiel einer aus dem Stand der Technik bekannten Sitzerhöhung in Draufsicht (Fig. 2a)) sowie in Unteransicht (Fig. 2b));
- Fig. 3: ein Ausführungsbeispiel einer erfindungsgemäßen Sitzerhöhung in perspektivischer Ansicht (Fig. 3a)), in Draufsicht (Fig. 3b)), in Unteransicht (Fig. 3c)), in Seitenansicht (Fig. 3d)) und in Draufsicht (Fig. 3e)) entsprechend Fig. 3b) mit montiertem Drei-Punkt-Gurt;
- Fig. 4: eine Detailansicht des Ausschnitts D von Fig. 3d);
- Fig. 5: eine Querschnittsdarstellung entlang des Schnitts E-E von Fig. 4;
- Fig. 6: eine perspektivische Ansicht eines Ausführungsbeispiels der Öse samt Ösenwanne, Steg und Halteanker;
- Fig. 7: ein Ausführungsbeispiel einer erfindungsgemäßen Sitzerhöhung, montiert auf einem Stuhl durch entsprechende Fixierung mittels zweier Haltegurte;
- Fig. 8: eine schematische Darstellung zweier aufeinander gestapelter erfindungsgemäßer Sitzerhöhungen in einer Ansicht von schräg hinten (Fig. 8a)) und von schräg vorne (Fig. 8b)); und
- Fig. 9: einen Signalflussgrafen zur Verdeutlichung eines Ausführungsbeispiels des erfindungsgemäßen Verfahrens.

Die mit Bezug auf die Fig. 1 und 2 eingeführten Bezugszeichen werden in den weiteren Figuren für gleiche und gleichwirkende Komponenten und Bauteile weiter verwendet.

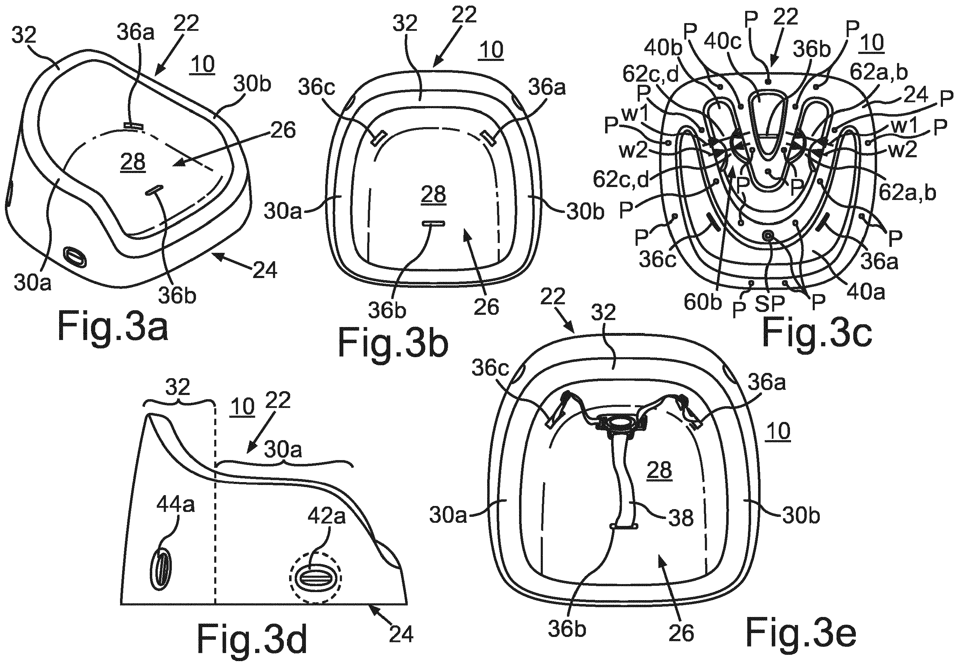

Fig. 3 zeigt unterschiedliche Darstellungen eines Ausführungsbeispiels einer erfindungsgemäßen Sitzerhöhung 10. Sie umfasst eine Sitzschale 22, welche eine Unterseite 24 zur Abstützung der Sitzschale 22 auf einer Sitzgelegenheit, beispielsweise einem Stuhl, und eine Oberseite 26 aufweist, an welcher eine Sitzfläche 28 sowie diese seitlich begrenzende Seitenwangenbereiche 30a, 30b und ein Rückenlehnenbereich 32 vorgesehen sind. Der Rückenlehnenbereich 32 kann auch lediglich als Rückenbereich, das heißt niedriger als in der Darstellung von Fig. 3, ausgeführt sein. In den Darstellungen von Fig. 3a), 3b) und 3c) sind Schlitze 36a, 36b, 36c zur Anbringung eines Drei-Punkt-Gurts zu erkennen, wobei Fig. 3e) die Darstellung von Fig. 3b) mit montiertem Drei-Punkt-Gurt 38 zeigt.

Wie Fig. 3c) zu entnehmen ist, weist die Unterseite 24 der Sitzschale 22 eine Stapelkontur auf, welche zur Schaffung einer Stapelmöglichkeit auf die aus Fig. 3a), Fig. 3b) und Fig. 3d) erkennbare Oberseite 26 der Sitzschale 22 abgestimmt ist. Zu diesem Zweck ist eine umschlossene Aussparung 40a vorgesehen, die den Rückenlehnenbereich 32 sowie die Seitenwangenbereiche 30a, 30b einer weiteren Sitzerhöhung 10 des gleichen Typs zumindest teilweise aufnehmen kann. Auf diese Weise lassen sich mehrere erfindungsgemäße Sitzerhöhungen 10 ineinandergreifend und damit besonders stabil aufeinander stapeln.

Auf der Unterseite 24 der Sitzschale 22 ist überdies eine umschlossene Aussparung 40b sowie eine weitere umschlossene Aussparung 40c zu erkennen. Die Schlitze 36a und 36c sind in dem Bereich der Aussparung 40a, der Schlitz 36b im Bereich der Aussparung 40c angeordnet. Dies führt dazu, dass die entsprechenden Fixierungen des Drei-Punkt-Gurts 38 in den Aussparungen 40a, 40c beim Aufeinanderstapeln mehrerer erfindungsgemäßer Sitzerhöhungen 10 nicht stören. Auf die Bedeutung der Aussparung 40b wird weiter unten noch näher eingegangen werden. Die umschlossenen Aussparungen 40a, 40b, 40c können auch aus Hohlräume oder umschlossene Materialaussparungen bezeichnet werden. Vorzugsweise sind die umschlossenen Aussparungen 40a, 40b, 40c dabei in Bereichen angeordnet, die von einem Bereich, in welchem sich der Schwerpunkt SP der Sitzschale 22 befindet, verschieden sind. Der Schwerpunkt SP liegt also vorzugsweise in einem mit Material befüllten Bereich der Sitzschale 22, und in einem Bereich der Sitzfläche 28, wodurch ein Durchbiegen verhindert wird, wenn ein Kind auf der Sitzfläche 28 sitzt.

Wie am besten aus der Darstellung von Fig. 3d) zu erkennen ist, ist eine Öse 42a im vorderen Außenbereich der Seitenwange 30a angeordnet. Eine Öse 44a ist im seitlichen Außenbereich des Rückenlehnenbereichs 32 angeordnet. Entsprechende Ösen 42b, 44b sind symmetrisch hierzu auf der anderen, in Fig. 3d) nicht einsehbaren, Seite der Sitzschale 22 angeordnet.

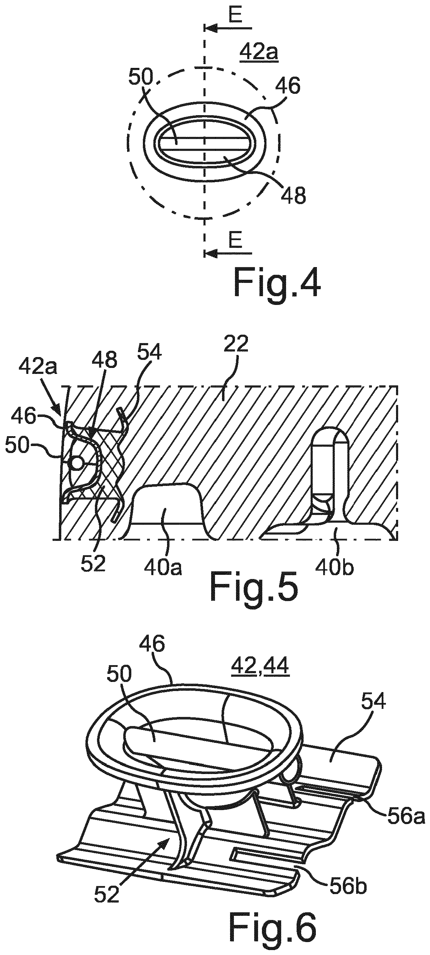

Fig. 4 zeigt eine vergrößerte Darstellung des Ausschnitts D von Fig. 3d). Erkennbar ist, dass eine Öse 42, 44 eine Ösenwanne 46 mit einem gerundet ausgebildeten Innenbereich 48 umfasst. Die Öse 42, 44 weist weiterhin einen Haltesteg 50 auf, wobei die Ösen 42 derart orientiert sind, dass der zugehörige Haltesteg 50 horizontal verläuft, während die Ösen 44 derart orientiert sind, dass der Haltesteg 50 im Wesentlichen vertikal verläuft.

Die Darstellung von Fig. 5 zeigt eine Querschnittsansicht entlang des Schnitts E-E von Fig. 4. Erkennbar sind nicht nur die umschlossenen Aussparungen 40a, 40b, sondern auch die Öse 42a samt Ösenwanne 46, gerundet ausgebildetem Innenbereich 48 und Haltesteg 50. Überdies ist erkennbar, dass die Öse 42a einen Steg 52 aufweist, der einerseits mit der Ösenwanne 46, andererseits mit einem Halteanker 54 zum Halten der Öse 42a in der Sitzschale 22 gekoppelt ist. Gemäß Fig. 6 umfasst der Steg 52 eine Vielzahl von Einzelstegen, vorliegend insgesamt 6 Einzelstege, wobei eine Erstreckungsebene von zweien der Einzelstege senkrecht zu Erstreckungsebenen von den vier anderen Einzelstegen verläuft. Damit ist die Ösenwanne 46 der Öse 42a besonders gut am Halteanker 54 abgestützt. Die Konstruktion der Öse 42a zeichnet sich dadurch durch besonders hohe Stabilität bei minimalem Gewicht aus. Wie der Darstellung von Fig. 5 entnommen werden kann, ist die jeweilige Öse 42, 44 samt Steg 52 und Halteanker 54 formschlüssig in der Sitzschale 22 aufgenommen.

Zurückkommend auf Fig. 6 kann dieser eine genauere Darstellung der Öse 42, 44 samt Steg 52 und Halteanker 54 entnommen werden. Wie gezeigt, ist der Halteanker 54 im Querschnitt wellenförmig ausgebildet. Er besitzt überdies mehrere Schlitze 56, von denen die Schlitze 56a, 56b zu sehen sind, die parallel zum jeweiligen Haltesteg 50 der Öse 42, 44 verlaufen. Die Materialstärke des Halteankers 54 ist derart gewählt, dass er aufgrund seiner wellenförmigen Struktur eine Zugbelastung auf den Haltesteg 50 gleichmäßig in der Sitzschale 22, die aus einem geschäumten Formteil gebildet ist, verteilen kann, ohne das Material der Sitzschale 22 zu beschädigen oder auszureißen.

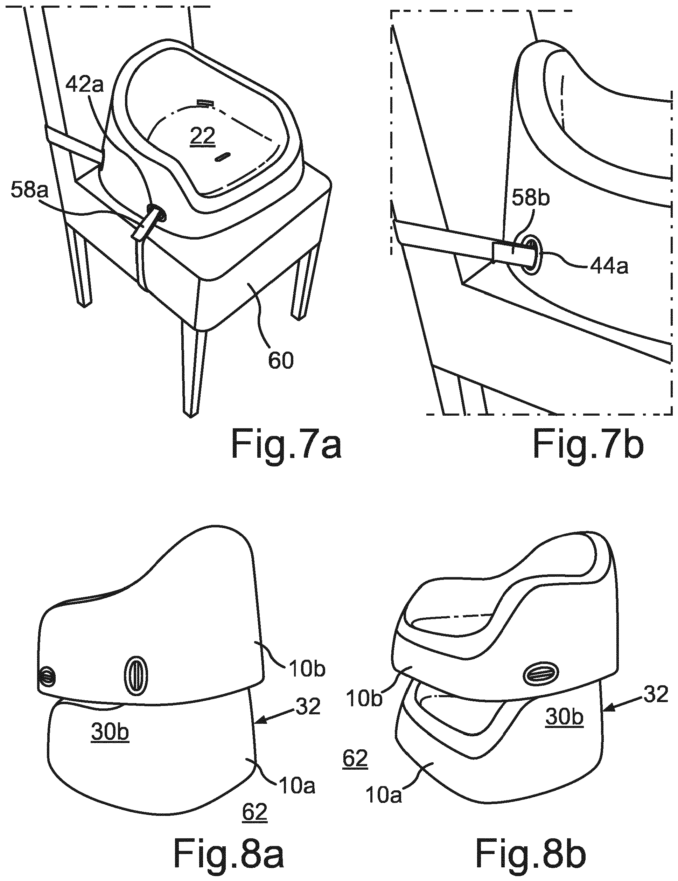

Zur Sitzerhöhung 10 von Fig. 3 gehören weiterhin zwei Haltegurte 58a, 58b, wobei die Sitzschale 22 mittels der Ösen 42a, 42b und des Haltegurts 58a an der Sitzfläche eines Stuhls 60 (siehe Fig. 7) fixiert ist, während die Sitzschale 22 mittels der Ösen 44a, 44b und des Haltegurts 58b an der Rückenlehne des Stuhls 60 fixiert ist.

Die umschlossene Aussparung 40b, siehe Fig. 3c, dient der Aufnahme der Haltegurte 58a, 58b. Dabei sind zwei Klemmvorrichtungen 60a, 60b in die Unterseite 24 der Sitzschale 22 innerhalb der Aussparung 40b eingeformt, wobei jede Klemmvorrichtung 60a, 60b Außenbereiche 62a, 62b beziehungsweise 62c, 62d aufweist, die eine größere Weite W1 aufweisen als ein Innenbereich 64a, 64b, dessen Weite mit W2 bezeichnet ist. Wie aus der Darstellung von Fig. 3c zu erkennen ist, ist der Übergang zwischen den Bereichen 62a, b und 64a einerseits und 62c, d und 64b andererseits abgerundet ausgebildet. Die Klemmvorrichtungen 60a, 60b dienen als Aufbewahrungsort bzw. als Transportsicherung für die Haltegurte 58a, 58b.

Bevorzugt wird die Sitzschale 22 aus Polyurethan geschäumt.

Die Fig. 8a und 8b zeigen zwei aufeinander gestapelte erfindungsgemäße Sitzerhöhungen 10. Wie zu erkennen ist, kann ein Gurtsystem mit Ösen 42, 44 und Haltegurten 58 vorgesehen sein, muss jedoch nicht. Wie Fig. 8a, 8b zu entnehmen ist, werden die Seitenwangenbereiche 30a, 30b einer ersten Sitzerhöhung 10a sowie deren Rückenlehnenbereich 32 von separaten umschlossenen Aussparungen oder einer gemeinsamen umschlossenen Aussparung 40a in der Unterseite 24 einer zweiten Sitzerhöhung 10b aufgenommen. Die räumliche Orientierung der Sitzerhöhung 10b ist dieselbe, wie die der direkt auf einer Unterlage 62 angeordneten Sitzerhöhung 10a.

Die Haltegurte 58a, 58b sind in der Aussparung 40b der jeweiligen Sitzerhöhung 10a, 10b untergebracht. Die Stapelbarkeit wird dadurch nicht beeinträchtigt, noch treten die Haltegurte 58a, 58b sonst störend in Erscheinung.

Umfasst eine derartige Sitzerhöhung 10a, 10b einen Drei-Punkt-Gurt 38 (siehe Fig. 3e), so beeinträchtigt dies die Stapelbarkeit ebenfalls nicht, da dieser in einer Vertiefung der Oberseite 26 der Sitzschale 22 angeordnet ist. Die Fixierungen des Drei-Punkt-Gurts 38 an der Unterseite einer Sitzerhöhung 10 befinden sich ebenfalls im Bereich von Aussparungen und stören damit ebenfalls nicht.

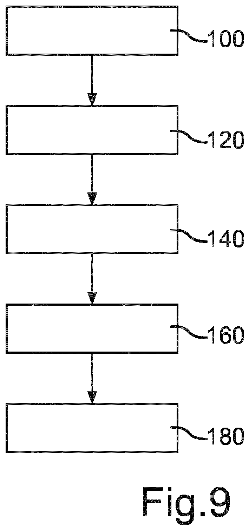

Fig. 9 zeigt einen Signalflussgrafen für ein Ausführungsbeispiel eines erfindungsgemäßen Verfahrens. Dabei wird in Schritt 100 eine Negativform einer Sitzschale 22 bereitgestellt, welche eine Unterseite 24 zur Abstützung der Sitzschale 22 auf einer Sitzgelegenheit und eine Oberseite 26 aufweist, an welcher eine Sitzfläche 28 sowie diese seitlich und rückwärtig begrenzende Seitenwangen- und Rückenbereiche 30a, 30b, 32 vorgesehen sind. In einem Schritt 120 werden eine erste und eine zweite Öse 42a, 42b mit jeweils einem Haltesteg 50 relativ zur Negativform im vorderen Außenbereich des jeweiligen Seitenwangenbereichs 30a, 30b positioniert. Im Schritt 140 werden eine dritte und vierte Öse 44a, 44b mit jeweils einem Haltesteg 50 relativ zur Negativform im hinteren Außenbereich des jeweiligen Seitenwangenbereichs 30a, 30b oder im seitlichen Außenbereich des Rückenbereichs 32 positioniert. Die Schritte 120 und 140 können auch in umgekehrter Reihenfolge ausgeführt werden.

Schließlich wird in Schritt 160 ein Kunststoffschaum, insbesondere Polyurethan, in die Negativform zur Ausbildung der Sitzschale 22 unter Fixierung der ersten, zweiten, dritten und vierten Öse 42a, 42b, 44a, 44b eingefüllt. Dabei wird der Kunststoff, insbesondere Polyurethan, zunächst in die Negativform eingefüllt und anschließend aufgeschäumt. Damit das zum Aufschäumen verwendete Gas wieder aus der Negativform entweichen kann, weist die Negativform Löcher bzw. Gaskanäle auf. Diese sind auf dem die Unterseite 24 der Sitzschale 22 bildenden Teil der Negativform angeordnet, insbesondere in einem Bereich, welcher von dem die mindestens eine Aussparung 40a, 40b, 40c in der Unterseite 24 der Sitzschale 22 bildenden Bereich der Negativform verschieden ist. Die Positionen dieser Löcher bzw. Kanäle in der Negativform korrespondieren damit zu den mit P bezeichneten Positionen der Unterseite 24 der Sitzschale 22 aus Fig. 3c. In einem Schritt 180 wird die Sitzschale samt den in das Kunststoffformteil eingeformten und damit fixierten Ösen 42a, 42b, 44a, 44b aus der Negativform entnommen.

## Patentansprüche

1. Sitzerhöhung (10) umfassend eine Sitzschale (22), welche eine Unterseite (24) zur Abstützung der Sitzschale (22) auf einer Sitzgelegenheit und eine Oberseite (26) aufweist, an welcher eine Sitzfläche (28) sowie diese seitlich und rückwärtig begrenzende Seitenwangen- und Rückenbereiche (30a, 30b, 32) vorgesehen sind, sowie zumindest ein erstes Gurtsystem (58a, 58b, 42a, 42b, 44a, 44b) zum Befestigen der Sitzschale (22) an einer Sitzgelegenheit, wobei das erste Gurtsystem (58a, 58b, 42a, 42b, 44a, 44b) eine erste, eine zweite, eine dritte und eine vierte Öse (42a, 42b, 44a, 44b) mit jeweiligem Haltesteg (50) umfasst sowie einen ersten und einen zweiten Haltegurt (58a, 58b), wobei die erste und die zweite Öse (42a, 42b) dem ersten Haltegurt (58a) und die dritte und die vierte Öse (44a, 44b) dem zweiten Haltegurt (58b) zugeordnet sind,
wobei die erste und die zweite Öse (42a, 42b) im vorderen Außenbereich des jeweiligen Seitenwangenbereichs (30a, 30b) angeordnet sind,
wobei die dritte und die vierte Öse (44a, 44b) im hinteren Außenbereich des jeweiligen Seitenwangenbereichs (30a, 30b) oder im seitlichen Außenbereich des Rückenbereichs (32) angeordnet sind,
wobei die jeweilige Öse (42a, 42b, 44a, 44b) eine Ösenwanne (46) mit gerundet ausgebildetem Innenbereich (48) umfasst,
wobei die Sitzschale (22) als geschäumtes Formteil ausgebildet ist, in dem die jeweiligen Ösen (42a, 42b, 44a, 44b) aufgenommen sind, wobei jede Öse (42a, 42b, 44a, 44b) einen Steg (52) aufweist, der einerseits mit der Ösenwanne (46), andererseits mit einem Halteanker (54) zum Halten der Öse (42a, 42b, 44a, 44b) in dem geschäumten Formteil gekoppelt ist.

2. Sitzerhöhung (10) nach Anspruch 1,
**dadurch gekennzeichnet,**
**dass** die erste und zweite Öse (42a, 42b) derart angeordnet sind, dass der jeweilige Haltesteg (50) in Gebrauchsstellung der Sitzerhöhung (10) horizontal orientiert ist, und
**dass** die dritte und vierte Öse (44a, 44b) derart angeordnet sind, dass der jeweilige Haltesteg (50) in Gebrauchsstellung der Sitzerhöhung (10) vertikal orientiert ist.

3. Sitzerhöhung (10) nach einem der Ansprüche 1 oder 2,
**dadurch gekennzeichnet,**
**dass** der Innenbereich der Ösenwanne (46) der jeweiligen Öse (42a, 42b, 44a, 44b) rund oder oval oder elliptisch ausgebildetist.

4. Sitzerhöhung (10) nach einem der vorhergehenden Ansprüche;
**dadurch gekennzeichnet,**
**dass** die jeweilige Öse (42a, 42b, 44a, 44b) samt Steg (52) und Halteanker (54) formschlüssig in dem geschäumten Formteil aufgenommen ist.

5. Sitzerhöhung (10) nach einem der vorhergehenden Ansprüche ,
**dadurch gekennzeichnet,**
**dass** der jeweilige Halteanker (54) im Querschnitt wellenförmig ausgebildet ist.

6. Sitzerhöhung (10) nach einem der vorhergehenden Ansprüche,
**dadurch gekennzeichnet,**
**dass** der jeweilige Halteanker (54) mindestens einen Schlitz (56a, 56b) aufweist, der parallel zum jeweiligen Steg (52) der Öse (42a, 42b, 44a, 44b) verläuft, und/oder mindestens eine Durchgangsöffnung.

7. Sitzerhöhung (10) nach einem der vorhergehenden Ansprüche,
**dadurch gekennzeichnet,**
**dass** der erste und der zweite Haltegurt (58a, 58b) einen Klettverschluss aufweisen.

8. Sitzerhöhung (10) nach einem der vorhergehenden Ansprüche,
**dadurch gekennzeichnet,**
**dass** die Unterseite (24) des Sitzes zumindest eine erste Aussparung (40b) zur Aufnahme des ersten Haltegurtes (58a) und eine zweite Aussparung (40b) zur Aufnahme des zweiten Haltegurtes (58b) umfasst.

9. Sitzerhöhung (10) nach Anspruch 8,
**dadurch gekennzeichnet,**
**dass** die erste Aussparung (40b) eine erste Klemmvorrichtung (60a) zum Festklemmen des ersten Haltegurtes (58a) und die zweite Aussparung (40b) eine zweite Klemmvorrichtung (60b) zum Festklemmen des zweiten Haltegurtes (58b) aufweist.

10. Sitzerhöhung (10) nach Anspruch 9,
**dadurch gekennzeichnet,**
**dass** die Sitzschale (22) als geschäumtes Formteil ausgebildet ist, wobei die erste und die zweite Klemmvorrichtung (60a, 60b) in das geschäumte Formteil eingeformt sind.

11. Sitzerhöhung (10) nach einem der Ansprüche 9 oder 10
**dadurch gekennzeichnet,**
**dass** die erste und die zweite Klemmvorrichtung (60a, 60b) jeweils zumindest einen ersten Bereich (62a, b; 62c, d) mit einer ersten Weite (W1) und zumindest einen zweiten Bereich (64a; 64b) mit einer zweiten Weite (W2) umfasst, wobei die erste Weite (W1) größer ist als die zweite Weite (W2).

12. Sitzerhöhung (10) nach Anspruch 11,
**dadurch gekennzeichnet,**
**dass** der Übergangsbereich von einem ersten Bereich (62a, b; 62c, d) zu einem zweiten Bereich (64a; 64b) abgerundet ist.

13. Sitzerhöhung (10) nach einem der Ansprüche 8 bis 12,
**dadurch gekennzeichnet,**
**dass** die erste Aussparung (40b) und die zweite Aussparung (40b) als gemeinsame Aussparung (40b) ausgebildet sind.

14. Sitzerhöhung (10) nach einem der Ansprüche 1 bis 13,
**dadurch gekennzeichnet,**
**dass** sie weiterhin ein zweites Gurtsystem (38) zum Halten eines Insassen in der Sitzschale (22) umfasst.

15. Verfahren zum Herstellen einer Sitzerhöhung (10), folgende Schritte umfassend:
a) Bereitstellen einer Negativform einer Sitzschale (22), welche eine Unterseite (24) zur Abstützung der Sitzschale (22) und eine Oberseite (26) aufweist, an welcher eine Sitzfläche (28) sowie diese seitlich und rückwärtig begrenzende Seitenwangen- und Rückenbereiche (30a, 30b, 32) vorgesehen sind (Schritt 100),
b) Positionieren einer ersten und einer zweiten Öse (42a, 42b) mit jeweils einem Haltesteg (50) relativ zur Negativform im vorderen Außenbereich des jeweiligen Seitenwangenbereichs (Schritt 120), sowie
Positionieren einer dritten und einer vierten Öse (44a, 44b) mit jeweils einem Haltesteg (50) relativ zur Negativform im hinteren Außenbereich des jeweiligen Seitenwangenbereichs (30a, 30b) oder im seitlichen Außenbereich des Rückenbereichs (32) (Schritt 140);
c) Einfüllen eines Kunststoffschaums in die Negativform zur Ausbildung der Sitzschale (10) unter Fixierung der ersten, zweiten, dritten und vierten Öse (42a, 42b, 44a, 44b) (Schritt 160).

## Claims

1. A booster seat (10) including a seat shell (22), which comprises a bottom side (24) for supporting the seat shell (22) on a seat and a top side (26), on which a seating surface (28) as well as side plate and backrest areas (30a, 30b, 32) laterally and rearward bounding it are provided, as well as at least one first belt system (58a, 58b, 42a, 42b, 44a, 44b) for fixing the seat shell (22) to a seat,
wherein
the first belt system (58a, 58b, 42a, 42b, 44a, 44b) includes a first, a second, a third, and a fourth eyelet (42a, 42b, 44a, 44b) with respective retaining web (50) as well as a first and a second retaining belt (58a, 58b), wherein the first and the second eyelet (42a, 42b) are associated with the first retaining belt (58a) and the third and the fourth eyelet (44a, 44b) are associated with the second retaining belt (58b),
wherein the first and the second eyelet (42a, 42b) are arranged in the front exterior area of the respective side plate area (30a, 30b),
wherein the third and the fourth eyelet (44a, 44b) are arranged in the rear exterior area of the respective side plate area (30a, 30b) or in the lateral exterior area of the back area (32),
wherein the respective eyelet (42a, 42b, 44a, 44b) includes an eyelet trough (46) with an interior area (48) formed rounded,
wherein the seat shell (22) is formed as a foamed molded part, in which the respective eyelets (42a, 42b, 44a, 44b) are accommodated, wherein each eyelet (42a, 42b, 44a, 44b) comprises a web (52), which is coupled to the eyelet trough (46) on the one hand, to a retaining anchor (54) for retaining the eyelet (42a, 42b, 44a, 44b) in the foamed molded part on the other hand.

2. The booster seat (10) according to claim 1,
**characterized in that**
the first and the second eyelet (42a, 42b) are arranged such that the respective retaining web (50) is horizontally oriented in use position of the booster seat (10), and that the third and the fourth eyelet (44a, 44b) are arranged such that the respective retaining web (50) is vertically oriented in use position of the booster seat (10).

3. The booster seat (10) according to any one of claims 1 or 2,
**characterized in that**
the interior area of the eyelet trough (46) of the respective eyelet (42a, 42b, 44a, 44b) is formed round or oval or elliptical.

4. The booster seat (10) according to any one of the preceding claims,
**characterized in that**
the respective eyelet (42a, 42b, 44a, 44b) along with web (52) and retaining anchor (54) is positively accommodated in the foamed molded part.

5. The booster seat (10) according to any one of the preceding claims,
**characterized in that**
the respective retaining anchor (54) is formed wave-shaped in cross-section.

6. The booster seat (10) according to any one of the preceding claims,
**characterized in that**
the respective retaining anchor (54) comprises at least one slot (56a, 56b), which extends parallel to the respective web (52) of the eyelet (42a, 42b, 44a, 44b) and/or at least one passage opening.

7. The booster seat (10) according to any one of the preceding claims,
**characterized in that**
the first and the second retaining belt (58a, 58b) comprise a Velcro fastener.

8. The booster seat (10) according to any one of the preceding claims,
**characterized in that**
the bottom side (24) of the seat includes at least one first recess (40b) for receiving the first retaining belt (58a) and one second recess (40b) for receiving the second retaining belt (58b).

9. The booster seat (10) according to claim 8,
**characterized in that**
the first recess (40b) comprises a first clamping device (60a) for clamping the first retaining belt (58a) and the second recess (40b) includes a second clamping device (60b) for clamping the second retaining belt (58b).

10. The booster seat (10) according to claim 9,
**characterized in that**
the seat shell (22) is formed as a foamed molded part, wherein the first and the second clamping device (60a, 60b) are molded into the foamed molded part.

11. The booster seat (10) according to one of claims 9 or 10,
**characterized in that**
the first and the second clamping device (60a, 60b) each include at least one first area (62a, b; 62c, d) with a first width (W1) and at least one second area (64a; 64b) with a second width (W2), wherein the first width (W1) is larger than the second width (W2).

12. The booster seat (10) according to claim 11,
**characterized in that**
the transitional area from a first area (62a, b; 62c, d) to a second area (64a; 64b) is rounded.

13. The booster seat (10) according to any one of claims 8 to 12,
**characterized in that**
the first recess (40b) and the second recess (40b) are formed as a common recess (40b).

14. The booster seat (10) according to any one of claims 1 to 13,
**characterized in that**
it further includes a second belt system (38) for retaining an occupant in the seat shell (22).

15. A method for producing a booster seat (10), including the following steps:
a) providing a negative mold of a seat shell (22), which comprises a bottom side (24) for supporting the seat shell (22) and a top side (26), on which a seating surface (28) as well as side plate and back areas (30a, 30b, 32) laterally and rearward bounding it are provided (step 100),
b) positioning a first and a second eyelet (42a, 42b) each with one retaining web (50) relative to the negative mold in the front exterior area of the respective side plate area (step 120), as well as
positioning a third and a fourth eyelet (44a, 44b) each with one retaining web (50) relative to the negative mold in the rear exterior area of the respective side plate area (30a, 30b) or in the lateral exterior area of the back area (32) (step 140);
c) filling a plastic foam into the negative mold for forming the seat shell (10) with fixing the first, second, third, and fourth eyelets (42a, 42b, 44a, 44b) (step 160).

## Revendications

1. Rehausseur (10), comportant une coque de siège (22), qui présente une face inférieure (24) destinée à servir d'appui à la coque de siège (22) sur un moyen d'assise, et une face supérieure (26), sur laquelle sont prévues une surface d'assise (28), ainsi que des zones de joue latérale et de dossier (30a, 30b, 32) délimitant celle-ci latéralement et à l'arrière, ainsi qu'au moins un premier un système de ceinture (58a, 58b, 42a, 42b, 44a, 44b) pour la fixation de la coque de siège (22) à un moyen d'assise,
dans lequel le premier système de ceinture (58a, 58b, 42a, 42b, 44a, 44b) comporte un premier, un second, un troisième et un quatrième œillet (42a, 42b, 44a, 44b) avec une nervure de retenue respective (50), ainsi qu'un premier et second harnais (58a, 58b), dans lequel le premier et le second œillet (42a, 42b) sont associés au premier harnais (58a), et le troisième et quatrième œillet (44a, 44b) sont associés au second harnais (58b),
dans lequel le premier et le second œillet (42a, 42b) sont agencés dans la zone extérieure avant de la zone de joue latérale respective (30a, 30b),
dans lequel le troisième et le quatrième œillet (44a, 44b) sont agencés dans la zone extérieure arrière de la zone de joue latérale respective (30a, 30b), ou dans la zone extérieure latérale de la zone de dossier (32),
dans lequel l'œillet respectif (42a, 42b, 44a, 44b) comporte une cuve d'œillet (46) avec une partie intérieure arrondie (48),
dans lequel la coque de siège (22) est formée en tant que pièce moulée en mousse, dans laquelle les œillets respectifs (42a, 42b, 44a, 44b) sont reçus,
dans lequel chaque œillet (42a, 42b, 44a, 44b) comporte une âme (52), qui est couplée d'une part avec la cuve d'œillet (46), et d'autre part avec une ancre de maintien (54) pour maintenir l'œillet (42a, 42b, 44a, 44b) dans la pièce moulée en mousse.

2. Rehausseur (10) selon la revendication 1,
**caractérisé en ce**
**que** le premier et le second œillet (42a, 42b) sont agencés de telle manière que la nervure de retenue respective (50) soit orientée horizontalement dans la position d'utilisation du rehausseur (10), et
**que** le troisième et le quatrième œillet (44a, 442b) sont agencés de telle manière que la nervure de retenue respective (50) soit orientée verticalement dans la position d'utilisation du rehausseur (10)

3. Rehausseur (10) selon l'une quelconque des revendications 1 ou 2,
**caractérisé en ce**
**que** la partie intérieure de la cuve d'œillet (46) de l'œillet respectif (42a, 42b, 44a, 44b) est de forme ronde ou de forme ovale ou de forme elliptique.

4. Rehausseur (10) selon l'une quelconque des revendications précédentes,
**caractérisé en ce**
**que** l'œillet respectif (42a, 42b, 44a, 44b), y compris l'âme (52) et l'ancre de maintien (54), est reçu dans la pièce moulée en mousse à engagement positif.

5. Rehausseur (10) selon l'une quelconque des revendications précédentes,
**caractérisé en ce**
**que** l'ancre de maintien respective (54) est ondulée sur sa section transversale.

6. Rehausseur (10) selon l'une quelconque des revendications précédentes,
**caractérisé en ce**
**que** l'ancre de maintien respective (54) comporte au moins une fente (56a, 56b) qui s'étend parallèlement à l'âme respective (52) de l'œillet (42a, 42b, 44a, 44b), et / ou au moins une ouverture de passage.

7. Rehausseur (10) selon l'une quelconque des revendications précédentes,
**caractérisé en ce**
**que** le premier et le second harnais (58a, 58b) comportent une fermeture auto-agrippante.

8. Rehausseur (10) selon l'une quelconque des revendications précédentes,
**caractérisé en ce**
**que** la face inférieure (24) du siège comporte au moins un premier évidement (40b) pour recevoir le premier harnais (58a), et un second évidement (40b) pour recevoir le second harnais (58b).

9. Rehausseur (10) selon la revendication 8,
**caractérisé en ce**
**que** le premier évidement (40b) comporte un premier dispositif de serrage (60a) pour serrer le premier harnais (58a), et le second évidement (40b) comporte un second dispositif de serrage (60b) pour serrer le second harnais (58b).

10. Rehausseur (10) selon la revendication 9,
**caractérisé en ce**
**que** la coque de siège (22) est formée en tant que pièce moulée en mousse, dans laquelle le premier et le second dispositif de serrage (60a, 60b) sont moulés dans la pièce moulée en mousse.

11. Rehausseur (10) selon l'une quelconque des revendications 9 ou 10, **caractérisé en ce**
**que** le premier et le second dispositif de serrage (60a, 60b) chacun comporte au moins une première zone (62a, b; 62c, d) avec une première largeur (W1), et au moins une seconde zone (64a; 64b) avec une seconde largeur (W2),
dans laquelle la première largeur (W1) est supérieure à la seconde largeur (W2).

12. Rehausseur (10) selon la revendication 11,
**caractérisé en ce**
**que** la zone de transition est arrondie d'une première zone (62a, b; 62c, d) à une seconde zone (64a; 64b).

13. Rehausseur (10) selon l'une quelconque des revendications 8 à 12,
**caractérisé en ce**
**que** le premier évidement (40b) et le second évidement (40b) sont formés en tant qu'évidement commun.

14. Rehausseur (10) selon l'une quelconque des revendications 1 à 13,
**caractérisé en ce**
**qu'**il comprend en outre un second système de ceinture (38) pour le maintien d'une personne assise dans la coque de siège (22).

15. Procédé de fabrication d'un rehausseur (10), comportant les étapes suivantes :
a) fournir un moule négatif d'une coque de siège (22), comportant une face inférieure (24) destinée à servir d'appui à la coque de siège (22), et une face supérieure (26), sur laquelle sont prévues une surface d'assise (28), ainsi que des zones de joue latérale et de dossier (30a, 30b, 32) délimitant celle-ci latéralement et à l'arrière (étape 100),
b) positionner un premier et un second œillet (42a, 42b) avec une nervure de retenue respective (50) par rapport au moule négatif dans la zone extérieure avant de la zone de joue latérale respective (étape 120),
ainsi que
positionner un troisième et un quatrième œillet (44a, 44b) avec une nervure de retenue respective (50) par rapport au moule négatif dans la zone extérieure arrière de la zone de joue latérale respective (30a, 30b), ou dans la zone extérieure latérale de la zone de dossier (32) (étape 140) ;
c) remplir un mousse synthétique dans le moule négatif pour former la coque de siège (10) avec fixation du premier, du second, du troisième et du quatrième œillet (42a, 42b, 44a, 44b) (étape 160).
